# EUROPÄISCHE PATENTSCHRIFT

(11) **EP 1 012 829 B1**
(45) Veröffentlichungstag und Bekanntmachung des Hinweises auf die Patenterteilung: **29.05.2002**
(21) Anmeldenummer: 97939955.7
(22) Anmeldetag: 16.08.1997
(51) Int. Cl.: G10L 15/06

(54) **VERFAHREN ZUR AUTOMATISCHEN SPRACHERKENNUNG**
AUTOMATIC SPEECH RECOGNITION PROCESS
PROCEDE DE RECONNAISSANCE VOCALE AUTOMATIQUE

(30) Priorität: 13.09.1996 DE 19637352
(43) Veröffentlichungstag der Anmeldung: 28.06.2000
(73) Patentinhaber: Tenovis GmbH & Co. KG, 60362 Frankfurt am Main (DE)
(72) Erfinder: EULER, Stephan, D-63500 Seligenstadt (DE)
(74) Vertreter: Patentanwaltskanzlei WILHELM & BECK
(86) Internationale Anmeldenummer: DE9701762
(87) Internationale Veröffentlichungsnummer: WO9811535

(56) Entgegenhaltungen:
- EP-A- 0 164 945
- ATAL B S: "Efficient coding of LPC parameters by temporal decomposition" PROCEEDINGS OF ICASSP 83. IEEE INTERNATIONAL CONFERENCE ON ACOUSTICS, SPEECH AND SIGNAL PROCESSING, BOSTON, MA, USA, 14-16 APRIL 1983, 1983, NEW YORK, NY, USA, IEEE, USA, Seiten 81-84 vol.1, XP002049464
- LIU Y J: "On creating averaging templates (isolated word recognition)" ICASSP 84. PROCEEDINGS OF THE IEEE INTERNATIONAL CONFERENCE ON ACOUSTICS, SPEECH AND SIGNAL PROCESSING, SAN DIEGO, CA, USA, 19-21 MARCH 1984, 1984, NEW YORK, NY, USA, IEEE, USA, Seiten 9.1/1-4 vol.1, XP002049465

## Beschreibung

### Stand der Technik

Die Erfindung geht von der Gattung aus, wie im unabhängigen Anspruch 1 angegeben.

Die automatische Spracherkennung kann sowohl zur Erkennung gesprochener, übertragener oder von einem Speicher wiedergegebener Wörter als auch zur Verifikation der Identität eines Benutzers eingesetzt werden.

Verfahren zur Spracherkennung beruhen entweder auf dem Vergleich zwischen abgespeicherten Referenzmustern und der unbekannten Äußerung oder auf der Beschreibung einzelner Wörter des Vokabulars mittels stochastischer Modelle. Dabei wird eine Äußerung, bestehend aus digitalen Abtastwerten, zunächst in eine Folge von Sprachblöcken einer vorgegebenen Dauer zerlegt, für jeden Sprachblock wird ein Satz von Merkmalsgrößen berechnet. Jeder Satz ergibt einen sogenannten Merkmalsvektor. Die statistischen Eigenschaften der Merkmalsgrößen werden in dem modellbasierten Ansatz durch Verteilungsdichtefunktionen mit entsprechenden Mittelwerten und Varianzen erfaßt. Diese Mittelwerte und Varianzen müssen zunächst in einer Trainingsphase anhand einer Vielzahl von representativen Trainingsäußerungen bestimmt werden, um einen Referenzsatz (ein sogenanntes Modell) zu gewinnen. Zur Erkennung einer unbekannten Äußerung werden dann für die Modelle, welche die Wörter des Vokabulars repräsentieren, jeweils Wahrscheinlichkeiten berechnet. Dasjenige Wort, dessen Modell die größte Wahrscheinlichkeit liefert, gilt als erkannt (DE 41 10 300 A1).

Die Europäische Patentschrift EP-A-0 164 945 offenbart ein Spracherkennungsverfahren, bei dem Modelle aus einer Reihe von zeitnormierten Folgen von Punkten im Parameterraum gebildet und gespeichert werden, wobei zu erkennende Sprachsignale durch eine Transformation mit den Modellen verglichen werden. Dabei wird eine Kurve gebildet, welche die Folge von Punkten approximiert, und die Kurve wird neu abgetastet. Der Satz von interpolierten Abtastwerten dient dann als Modell.

### Vorteile der Erfindung

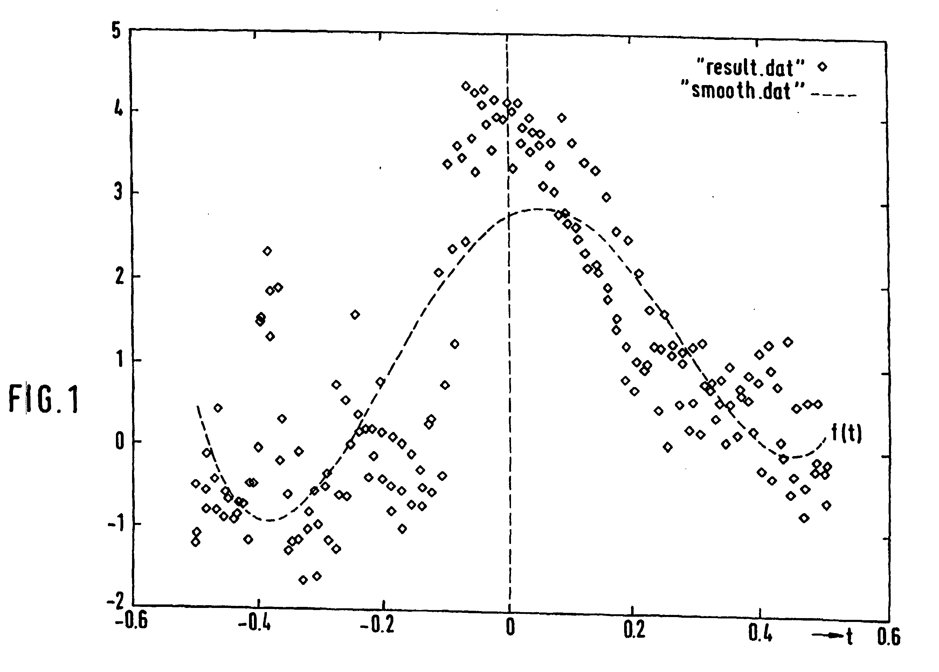

Bei dem neuen Verfahren werden für mehrere Referenz-Äußerungen desselben Informationsgehaltes, z.B. Wörter, die zeitlichen Folgen der Komponenten der Merkmalsgrößen jeweils durch geeignet bestimmte Ausgleichsfunktionen nachgebildet. Dazu werden zunächst alle Referenz-Äußerungen auf ein festes zeitliches Intervall abgebildet. Beispielsweise kann das Intervall von -0,5 bis +0,5 gewählt werden, wobei -0,5 den Anfang und +0,5 das Ende einer Äußerung ist. Durch diese Zeitnormierung wird jeder Merkmalsvektor auf einen entsprechenden Punkt t in dem Intervall [-0,5, +0,5] abgebildet. Betrachtet man jeweils eine einzelne Komponente y (also eine einzelne Merkmalsgröße) einer Folge von Merkmalvektoren, ergibt sich dann eine Menge von Punkten (y, t) für eine Referenz-Äußerung bzw. entsprechend mehr Punkte bei mehreren Referenz-Äußerungen. In Figur 1 sind als Beispiel alle so resultierenden Punkte (result.dat) für die erste Komponente der drei Folgen von Merkmalsvektoren von drei Referenz-Äußerungen eines Speichers desselben Wortes ZWEI aufgetragen. Diese Menge von Punkten wird durch eine gemeinsame Ausgleichsfunktion f(t) beschrieben. In Figur 1 ist für das Beispiel gestrichelt die Ausgleichsfunktion (smooth.dat) als Ausgleichspolymom fünften Grades eingetragen, dessen Koeffizenten nach der Methode der Gauß'schen Fehlerquadrate aus den Punkten bestimmt wurden. Ein Wort wird in dieser Weise durch entsprechende Werte der Koeffizienten von Ausgleichspolynomen modellhaft repräsentiert. Die Gesamtheit der Ausgleichspolynome der Referenzäußerungen desselben Informationsgehaltes ist das Modell für das in den Referenz-Äußerungen geäußerte Wort. Dabei bildet jedes Ausgleichspolynom eine Komponente des Modells.

Bei der Bearbeitung einer unbekannten Äußerung wird zunächst wieder eine Folge von zeitlich gestaffelten Merkmalsvektoren berechnet und auf das vorgegebene Intervall [-0,5, +0,5] abgebildet. Für jedes Modell eines Wortes werden dann komponentenweise die Abstände zwischen einerseits allen Punkten (y, t) der abgebildeten Merkmalsgrößen der unbekannten Äußerung und andererseits den jeweiligen Werten der Ausgleichsfunktionen f(t) des Modells berechnet und über alle Merkmalsvektoren und Komponenten aufsummiert. Dieser Gesamtabstand gilt als Maß für die Ähnlichkeit der Modelläußerung (hier: ZWEI) und der unbekannten Äußerung. Für die Erkennung unbekannter Wörter gilt dann die Referenz-Äußerung mit dem geringsten Gesamtabstand als erkannt.

### Zusammengefaßt bedeutet dies:

Zur automatischen Spracherkennung werden für unterschiedliche Worte zunächst Referenz-Äußerungen aufgenommen, aus denen Folgen von zeitlich aufeinander folgenden Referenz-Merksmalsvektoren gebildet werden, die jeweils auf ein einheitliches zeitliches Intervall abgebildet werden. Aus den dabei entstehenden Folgen von Modellvektoren für die Referenz-Äußerungen wird für jedes Wort ein einziges Modell der Referenz-Äußerungen gebildet, dessen Komponenten aus Ausgleichsfunktionen bestehen.

Ein zu erkennendes Wort wird zu einer Folge von Merkmalsvektoren verarbeitet, die auf dasselbe zeitliche Intervall abgebildet wird. Die dabei entstehende Folge von Abbildungsvektoren wird in Vergleichsschritten mit den abgespeicherten Modellen verglichen.

Das Verfahren erlaubt ein sehr einfaches Erstellen von Modellen für einzelne Wörter, wobei die Information kompakt durch Koeffizienten für Ausgleichsfunktionen repräsentiert wird. Zur Erkennung müssen lediglich die einzelnen zeitlich normierten Merkmalsgrößen einer unbekannten Äußerung mit den Werten von Ausgleichsfunktionen zum jeweiligen normierten Zeitpunkt verglichen werden, so daß insgesamt eine sowohl im Hinblick auf Speicheraufwand als auch Rechenzeitbedarf günstige Implementierung möglich wird.

Eine vorteilhafte Weiterbildung ist im abhängigen Anspruch angegeben.

### Zeichnungen

Ein Ausführungsbeispiel der Erfindung ist in der Zeichnung gezeigt und in der nachfolgenden Beschreibung näher erläutert. Es ist dargestellt in
Figur 1:
ein Diagramm für ein Zeitintervall (Abszisse) mit einer Menge von Punkten jeweils einer einzelnen Komponente dreier Folgen von Merkmalsvektoren für drei Äußerungen ZWEI mit zugehöriger Ausgleichsfunktion;

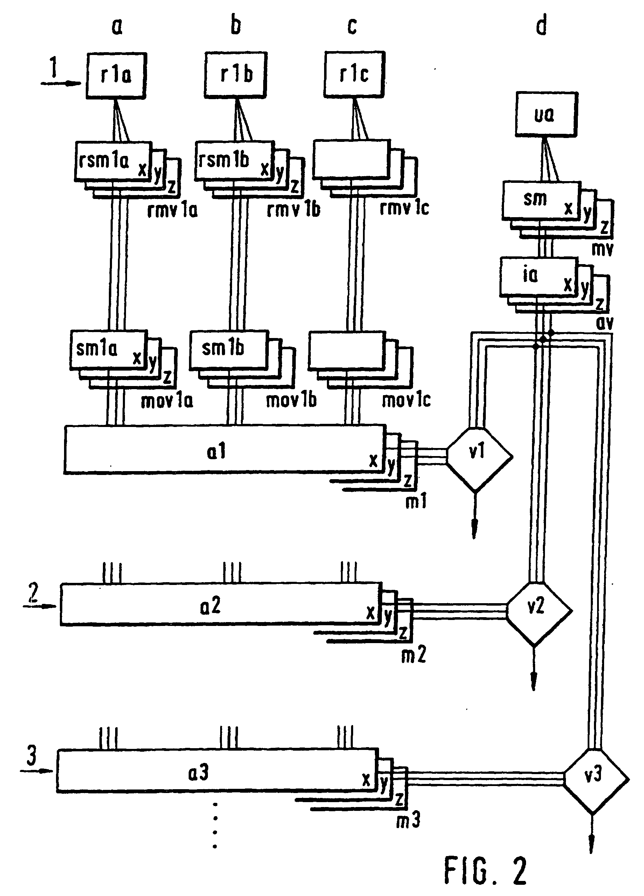

Figur 2: ein Funktionsdiagramm entsprechend der Erfindung

### Funktionsbeschreibung eines bevorzugten Ausführungsbeispiels:

Figur 2 zeigt links drei Spalten a, b, c, in denen der Verfahrensablauf zur Gewinnung eines Modells für drei Referenz-Äußerungen r1a, r1b, r1c (z.B. durch unterschiedliche Sprecher) des Informationsgehaltes (Wortes) 1 bzw. 2 bzw. 3 dargestellt ist. Der Informationsgehalt 1 kann beispielsweise das Wort ZWEI sein, das in den drei Referenz-Äußerungen r1a, r1b, ... vorliegt. In einer vierten Spalte d ist der Verfahrensablauf für die Behandlung einer unbekannten Äußerung ua angegeben, der schließlich in Vergleichsschritte v1, v2, v3 mündet.

Die Verfahrensabläufe in den Spalten a bis c beginnen mit Referenz-Äußerungen r1a, r1b, r1c, die im Verlauf weiterer Verfahrensschritte zu einem einzigen Modell komprimiert werden. Dazu werden zunächst Folgen rmv1a, rmv1b, rmv1c von Referenz-Merkmalsvektoren gebildet. Jede Folge rmv1a, rmv1b, ... von Referenz-Merkmalsvektoren besteht aus zeitlich gestaffelten Referenz-Merkmalsvektoren (beispielsweise Spektralkomponenten), von denen jeder einen von aufeinander folgenden Zeitabschnitten (Sprachblöcken von beispielsweise jeweils 20 ms) des Sprachhsignals der Referenz-Äußerung repräsentiert. Die Folgen von Referenz-Merkmalsvektoren setzen sich jeweils aus Folgen von Komponenten x, y, z zusammen. Eine solche Folge von Komponenten, z.B.die Folge von x-Komponenten besteht aus Daten (vgl. Figur 1), die eine Referenzfolge von Merkmalsgrößen rsm1ax bzw. rsm1bx bzw. rsmlcx bilden.

Aus den Folgen rmv1a, ... von Referenz-Merkmalsvektoren werden Folgen mov1a, ... von Modellvektoren für die Referenzäußerungen r1a, r1b, ... gebildet. Dies geschieht durch Abbildung auf ein einheitlichhes zeitliches Intervall, das die Folgen umfaßt. Die Folgen von Modellvektoren bestehen wiederum aus Folgen von x-, y- bzw. z-Komponenten. Diese Komponentenfolgen bestehen jeweils aus einer Folge (beispielsweise sm1ax, sm1bx, ...) von Modellgrößen für die Referenzäußerungen r1a, r1b, ... .

Schließlich werden aus den Folgen sm1ax, sm1bx, ... ,sm1ay, sm1by,... von Modellgrößen komponentenweise Ausgleichsfunktionen a1x, a1y, a1z gebildet. Zusammen ergeben diese Ausgleichsfunktionen das Modell m1 der Referenz-Äußerungen r1a, r1b, r1c für den Informationsgehalt 1 (hier: für das Wort ZWEI).

Entsprechend werden für jeweils verschiedene Äußerungen anderer Informationen 2 bzw. 3 Ausgleichsfunktionen a2x, a2y, a2z beziehungsweise a3x, a3y, a3z bzw. Modelle m2 bzw. m3 gebildet und abgespeichert.

Soll nun eine unbekannte Äußerung ua erkannt werden, so wird aus dieser gemäß Spalte d eine Folge von Merkmalsvektoren mv mit x-, y-, z-Komponenten , also Folgen sm von Merkmalsgrößen gebildet. Durch Abbildung auf ein zeitliches Intervall gleicher Dauer wie in den Spalten a bis c wird eine Folge von Abbildungsvektoren av, bestehend aus Folgen iax, iay, iaz von Abbildungsgrößen gebildet.

Die Folgen av von Abbildungsvektoren werden nun in Vergleichsschritten v1, v2, v3 mit den abgespeicherten Modellen m1, m2, m3 verglichen, um herauszufinden, welcher der Informationen 1, 2, 3 die unbekannte Äußerung ua am nächsten kommt, wobei für jeden einzelnen Merkmalsvektor der resultierende Abstand zwischen einerseits seinen Abbildungsgrößen und andererseits den entsprechenden Ausgleichsfunktionen berechnet wird. Durch Summation aller dieser Abstandswerte ergibt sich der Gesamtabstand zwischen unbekannter Äußerung und dem jeweils zum Vergleich herangezogenen Modell.

## Patentansprüche

1. Verfahren zur Spracherkennung, bei dem einerseits für Referenzzwecke zeitlich gestaffelte Referenzfolgen (rsmlax, rsm1bx, rsm1cx; rsm1ay, rsm1by,... ; ...) von Merkmalsgrößen vorliegen, die aus Referenz-Äußerungen (r1a, r1b, ...) oder -Teiläußerungen mit einheitlichem Informationsgehalt (1), z. B. desselben Wortes, gebildet sind,
und andererseits aus einer unbekannten Äußerung (ua) zeitlich gestaffelte Folgen (smx, smy, smz) von Merkmalsgrößen gebildet werden
und bei dem ein Vergleich stattfindet von
einerseits zu Referenzzwecken gebildeten und gespeicherten Modellen von Referenz-Äußerungen oder Referenz-Teiläußerungen mit
andererseits einer aktuellen Vektorfolge, die aus der unbekannten Äußerung (ua) oder Teiläußerung gebildet wird, **gekennzeichnet durch** folgende Merkmale:
- die Modelle (m1, m2, ...) sind folgendermaßen gebildet:
-- aus mehreren Referenz-Äußerungen (r1a, r1b, ...) oder - Teiläußerungen mit einheitlichem Informationsgehalt (1) werden zugeordnete Folgen (rmv1a, rmv1b, ...) von Referenz-Merkmalsvektoren gebildet, deren Komponenten jeweils aus einem Satz von Merkmalsgrößen bestehen,
-- **durch** Abbildung auf ein einheitliches zeitliches Intervall wird aus jeweils einer Folge (rmv1a) von Referenz-Merkmalsvektoren eine zugehörige Folge (mov1a) von Modellvektoren gebildet,
-- jeweils aus den Folgen (sm1ax, sm1by, ... ) einander entsprechender Komponenten mehrerer Folgen (mov1a, mov1b, ... ) von Modellvektoren, die demselben Informationsgehalt (1) entsprechen, werden Ausgleichsfunktionen (a1x, a1y, ...) gebildet, die jeweils eine Folge der Komponenten beschreiben,
-- jeweils aus den Koeffizienten der Ausgleichsfunktionen, die zum selben Informationsgehalt (1) gehören, wird ein Modell (m1) der zugehörigen Referenz-Äußerungen (r1a, r1b, ...) oder -Teiläußerungen gebildet,
- aus einer unbekannten Äußerung (ua) oder Teiläußerung wird eine Folge (mv) von Merkmalsvektoren gebildet,
- **durch** Abbildung auf das einheitliche zeitliche Intervall wird aus der Folge (mv) von Merkmalsvektoren eine Folge (av) von Abbildungsvektoren gebildet, die als aktuelle Vektorfolge für den komponentenweisen Vergleich mit den gespeicherten Modellen dient.

2. Verfahren nach Anspruch 1, **dadurch gekennzeichnet, daß** als Ausgleichsfunktionen Ausgleichspolynome dienen und die Koeffizienten eines Ausgleichspolynoms nach der Methode der Gauß'schen Fehlerquadrate aus den Punkten einander entsprechender Komponentenfolgen (sm1ax, sm1bx, ... ) der Modellvektorenfolgen von mehreren Äußerungen eines Sprechers bestimmt werden.

## Claims

1. A method of speech recognition in which on the one hand for reference purposes time-staggered reference sequences (rsm1ax, rsm1bx, rsm1cx; rsm1ay, rsm1by,...;...) of feature values are present, which are formed from reference statements (r1a, r1b,...) or partial statements with unitary information content (1), for example of the same word, and on the other hand time-staggered sequences (smx, smy, smz) of feature values are formed from an unknown statement (ua) and in which a comparison takes place of on the one hand models of reference statements or reference partial statements, which are formed for reference purposes and stored, with on the other hand a current vector sequence which is formed from the unknown statement (ua) or partial statement, **characterised by** the following features:
- the models (m1, m2, ...) are formed as follows:
-- formed from a plurality of reference statements (r1a, r1b...) or partial statements with a unitary information content (1) are associated sequences (rmv1a, rmv1b,...) of reference feature vectors whose components respectively comprise a set of feature values,
-- formed from a respective sequence (rmv1a) of reference feature vectors by imaging on to a unitary time interval is an associated sequence (mov1a) of model vectors,
-- formed from the respective sequences (sm1ax, sm1by,...) of mutually corresponding components of a plurality of sequences (mov1a, mov1b,...) of model vectors which correspond to the same information content (1) are compensation functions (a1x, a1y,...) which respectively describe a sequence of the components,
-- formed respectively from the coefficients of the compensation functions which belong to the same information content (1) is a model (m1) of the associated reference statements (r1a, r1b,...) or partial statements,
- formed from an unknown statement (ua) or partial statement is a sequence (mv) of feature vectors, and
- formed from the sequence (mv) of feature vectors by imaging on to a unitary time interval is a sequence (av) of imaging vectors which serves as the current vector sequence for the component-wise comparison with the stored models.

2. A method according to claim 1 **characterised in that** compensation polynomials serve as the compensation functions and the coefficients of a compensation polynomial are determined in accordance with the method of Gaussian error squares from the points of mutually corresponding component sequences (sm1ax, sm1bx, ...) of the model vector sequences of a plurality of statements of a speaker.

## Revendications

1. Procédé pour la reconnaissance de la parole, dans lequel d'une part on forme à des fins de référence des séquences de référence échelonnées dans le temps (rsm1ax, rsm1bx, rsm1cx; rsm1ay, rsm1by, ... ; ...) de grandeurs caractéristiques, qui sont formées à partir d'énoncés de référence (r1a, r1b, ...) ou d'énoncés partiels de référence avec un contenu d'information uniforme (1), par exemple le même mot, et d'autre part on forme à partir d'un énoncé inconnu (ua) des séquences échelonnées dans le temps (smx, smy, smz) de grandeurs caractéristiques et dans lequel on effectue une comparaison entre d'une part des modèles, formés à des fins de référence et mémorisés, d'énoncés de référence ou d'énoncés partiels de référence et d'autre part une séquence de vecteurs actuelle qui est formée à partir de l'énoncé inconnu (ua) ou de l'énoncé partiel, **caractérisé par** les caractéristiques suivantes :
- les modèles (m1, m2,...) sont formés de la manière suivante :
-- à partir de plusieurs énoncés de référence (r1a, r1b, ...) ou d'énoncés partiels de référence avec un contenu d'information uniforme (1), on forme des séquences associées (rmv1a, rmv1b, ...) de vecteurs caractéristiques de référence dont les composantes sont constituées respectivement d'un ensemble de grandeurs caractéristiques,
-- par une projection sur un intervalle temporel uniforme, on forme à partir de respectivement une séquence (rmv1a) de vecteurs caractéristiques de référence une séquence associée (mov1a) de vecteurs modèles,
-- respectivement à partir des séquences (sm1ax, sm1by, ...) de composantes, correspondant les unes aux autres, de plusieurs séquences (mov1a, mov1b, ...) de vecteurs modèles, qui correspondent au même contenu d'information (1), on forme des fonctions de compensation (a1x, a1y, ...) qui décrivent respectivement une séquence des composantes,
-- respectivement à partir des coefficients des fonctions de compensation, qui appartiennent au même contenu d'information (1), on forme un modèle (m1) des énoncés de référence associés (r1a, r1b, ...) ou des énoncés partiels de référence associés,
- à partir d'un énoncé inconnu (ua) ou d'un énoncé partiel, on forme une séquence (mv) de vecteurs caractéristiques,
- par une projection sur un intervalle temporel uniforme, on forme à partir de la séquence (mv) de vecteurs caractéristiques une séquence (av) de vecteurs de projection qui sert de séquence de vecteurs actuelle pour la comparaison, au niveau des composantes, aux modèles mémorisés.

2. Procédé selon la revendication 1, **caractérisé par le fait qu'**on utilise des polynômes de compensation comme fonctions de compensation et on détermine les coefficients d'un polynôme de compensation selon la méthode des carrés d'erreur de Gauss à partir des points de séquences de composantes correspondant les unes aux autres (sm1ax, sm1bx, ...) des séquences de vecteurs modèles de plusieurs énoncés d'un locuteur.
